# EUROPEAN PATENT APPLICATION

(11) **EP 3 955 166 A2**
(43) Date of publication of application: **16.02.2022**
(21) Application number: 21188138.8
(22) Date of filing: 28.07.2021
(51) Int. Cl.: G06N 3/04, G06N 3/08, G06K 9/62, G06V 40/16

(54) **TRAINING IN NEURAL NETWORKS**

(30) Priority: 06.08.2020 FI 20205786
(71) Applicant: Nokia Technologies Oy, 02610 Espoo (FI)
(72) Inventor: RANGU, Goutham, 33720 Tampere (FI); CRICRÌ, Francesco, 33100 Tampere (FI); AKSU, Emre Baris, 33800 Tampere (FI)
(74) Representative: Nokia EPO representatives

(57) **Abstract**

A system, obtaining a first training dataset, comprising a plurality of first image and pose data pairs; obtaining a first generated dataset, comprising a plurality of first image and estimated pose data pairs, wherein estimated pose data of the first image and estimated pose data pairs are generated by a first neural network trained using the first training dataset; obtaining a second generated dataset, comprising a plurality of second image and estimated pose data pairs, wherein estimated pose data of the second image and estimated pose data pairs are generated by a second neural network trained using the first training dataset; generating the first and second generated datasets a generated training dataset, comprising image and estimated pose data pairs selected from said first generated dataset; and training a third neural network based on a combination of some or all of the first training dataset and the generated training dataset.

## Description

### Field

This specification relates to training in neural networks, for example to training a student neural network based on a teacher neural network and unlabelled training data.

### Background

A known strategy for seeking to improve the performance of a low-capacity neural network is to use teacher-student training in which a high capacity network (the "teacher") helps the low capacity network (the "student") to learn a task. Although developments have been made, there remains a need for further developments in this field.

### Summary

In a first aspect, this specification describes an apparatus comprising means for performing: obtaining (e.g. receiving) a first training dataset, wherein the first training dataset comprises a plurality of first image and pose data pairs; obtaining (e.g. receiving or generating) a first generated dataset, wherein the first generated dataset comprises a plurality of first image and estimated pose data pairs, wherein estimated pose data of the first image and estimated pose data pairs are generated, from a set of images (e.g. unlabelled images), by a first neural network trained using the first training dataset; obtaining (e.g. receiving or generating) a second generated dataset, wherein the second generated dataset comprises a plurality of second image and estimated pose data pairs, wherein estimated pose data of the second image and estimated pose data pairs are generated, from the set of images (e.g. unlabelled images), by a second neural network trained using the first training dataset; generating a generated training dataset from the first and second generated datasets, wherein the generated training dataset comprises image and estimated pose data pairs selected from said first generated dataset; and training a third neural network based on a combination of some or all of the first training dataset and the generated training dataset. The pose data may comprise head pose data comprising one or more of roll, yaw and pitch data.

The said selection may be based on a normalised histogram distribution of average differences between estimated pose data of the first and second generated datasets for respective images such that more selections are made at pose data levels having higher average differences than pose data levels having lower average differences. The histogram distribution may be based on quantised estimated pose data of the first generated training dataset, such that said estimated pose data has a plurality of quantised pose data ranges. The apparatus may further comprise means configured to perform: determining a number of selected image and estimated pose data pairs for each quantised pose data range such that more selections are made at quantised pose data ranges having higher average differences than quantised pose data ranges having lower average differences. The apparatus may comprise means configured to perform random or pseudo-random selection of said samples from within a quantised pose data range.

The first neural network may be a relatively high capacity neural network (e.g. a "teacher") and the second and third neural networks are relatively low capacity neural networks (e.g. "students").

Some example embodiments further comprise means configured to perform: generating the first generated dataset by applying image data of said images to the first neural network. Alternatively, or in addition, some example embodiments may comprise generating the second generated dataset by applying image data of said images to the second neural network.

The apparatus may be configured to perform: training the first neural network using said first training dataset.

The apparatus may be configured to perform: training the second neural network using said first training dataset.

The said means may comprise: at least one processor; and at least one memory including computer program code, the at least one memory and the computer program configured, with the at least one processor, to cause the performance of the apparatus.

In a second aspect, this specification describes a method comprising: obtaining a first training dataset, wherein the first training dataset comprises a plurality of first image and pose data pairs; obtaining a first generated dataset, wherein the first generated dataset comprises a plurality of first image and estimated pose data pairs, wherein estimated pose data of the first image and estimated pose data pairs are generated, from a set of images, by a first neural network trained using the first training dataset; obtaining a second generated dataset, wherein the second generated dataset comprises a plurality of second image and estimated pose data pairs, wherein estimated pose data of the second image and estimated pose data pairs are generated, from the set of images, by a second neural network trained using the first training dataset; generating a generated training dataset from the first and second generated datasets, wherein the generated training dataset comprises image and estimated pose data pairs selected from said first generated dataset; and training a third neural network based on a combination of some or all of the first training dataset and the generated training dataset. The pose data may comprise head pose data comprising one or more of roll, yaw and pitch data

The selection may be based on a normalised histogram distribution of average differences between estimated pose data of the first and second generated datasets for respective images such that more selections are made at pose data levels having higher average differences than pose data levels having lower average differences. The histogram distribution may be based on quantised pose data of the first generated dataset. The method may further comprise determining a number of selected image and estimated pose data pairs for each quantised pose data range such that more selections are made at quantised pose data ranges having higher average differences than quantised pose data ranges having lower average differences.

The method may further comprise performing random or pseudo-random selection of said samples from within a quantised pose data range.

The first neural network may be a relatively high capacity neural network (e.g. a "teacher") and the second and third neural networks are relatively low capacity neural networks (e.g. "students").

The method may comprise generating the first generated dataset by applying image data of said images to the first neural network and/or generating the second generated dataset by applying image data of said images to the second neural network.

In a third aspect, this specification describes a user device comprising a neural network trained using the method as described with reference to the second aspect.

In a fourth aspect, this specification describes computer-readable instructions which, when executed by computing apparatus, cause the computing apparatus to perform (at least) any method as described with reference to the second aspect.

In a fifth aspect, this specification describes a computer-readable medium (such as a non-transitory computer-readable medium) comprising program instructions stored thereon for performing (at least) any method as described with reference to the second aspect.

In a sixth aspect, this specification describes an apparatus comprising: at least one processor; and at least one memory including computer program code which, when executed by the at least one processor, causes the apparatus to perform (at least) any method as described with reference to the second aspect.

In a seventh aspect, this specification describes a computer program comprising instructions for causing an apparatus to perform at least the following: obtaining a first training dataset, wherein the first training dataset comprises a plurality of first image and pose data pairs; obtaining a first generated dataset, wherein the first generated dataset comprises a plurality of first image and estimated pose data pairs, wherein estimated pose data of the first image and estimated pose data pairs are generated, from a set of images, by a first neural network trained using the first training dataset; obtaining a second generated dataset, wherein the second generated dataset comprises a plurality of second image and estimated pose data pairs, wherein estimated pose data of the second image and estimated pose data pairs are generated, from the set of images, by a second neural network trained using the first training dataset; generating a generated training dataset from the first and second generated datasets, wherein the generated training dataset comprises image and estimated pose data pairs selected from said first generated dataset; and training a third neural network based on a combination of some or all of the first training dataset and the generated training dataset.

In an eighth aspect, this specification describes an apparatus comprising means (such as an input) for obtaining (e.g. receiving) a first training dataset, wherein the first training dataset comprises a plurality of first image and pose data pairs; means (such as a first data generation module) for obtaining (e.g. receiving or generating) a first generated dataset, wherein the first generated dataset comprises a plurality of first image and estimated pose data pairs, wherein estimated pose data of the first image and estimated pose data pairs are generated, from a set of images (e.g. unlabelled images), by a first neural network trained using the first training dataset; means (such as a second data generation module) for obtaining (e.g. receiving or generating) a second generated dataset, wherein the second generated dataset comprises a plurality of second image and estimated pose data pairs, wherein estimated pose data of the second image and estimated pose data pairs are generated, from the set of images (e.g. unlabelled images), by a second neural network trained using the first training dataset; means (such as a data processing module) for generating a generated training dataset from the first and second generated datasets, wherein the generated training dataset comprises image and estimated pose data pairs selected from said first generated dataset; and means (such as a training module) for training a third neural network based on a combination of some or all of the first training dataset and the generated training dataset.

In the ninth aspect, this specification describes an apparatus comprising means for receiving a teacher-student model generated dataset, wherein in the generated dataset is labelled data; receiving a second dataset, wherein in the second dataset is labelled data; training a neural network stored in the apparatus with the teacher-student model generated dataset and the second dataset; receiving sensor data, wherein the sensor data is unlabelled data; using the trained neural network to inference the sensor data to determine one or more related inference results, and executing the determined one or more related inference results in the apparatus and/or transmitting the one or more results to some other device.

In the tenth aspect, this specification describes an apparatus comprising means for determining or generating a teacher-student model dataset from a teacher network generated dataset and a student network generated dataset, wherein the teacher network generated dataset and the student network generated dataset are labelled data; receiving a second dataset, wherein in the second dataset is labelled data; training a neural network stored in the apparatus with the determined teacher-student model dataset and the second dataset; using the trained neural network to inference the sensor data to determine one or more related inference results; and executing the determined one or more related inference results in the apparatus and/or transmitting the one or more results to some other device.

### Brief description of the drawings

Example embodiments will now be described, by way of non-limiting examples, with reference to the following schematic drawings:
FIG. 1 is a block diagram of a system in accordance with an example embodiment;
FIGS. 2 and 3 show neural network modules in accordance with example embodiments;
FIG. 4 is a flow chart showing an algorithm in accordance with an example embodiment;
FIG. 5 is a block diagram of a system in accordance with an example embodiment;
FIGS. 6 and 7 are flow charts showing algorithms in accordance with example embodiments;
FIGS. 8 and 9 are histogram plots in accordance with example embodiments;
FIG. 10 shows plots demonstrating the performance of implementations of example embodiments;
FIG. 11 is a block diagram of components of a system in accordance with an example embodiment;
FIGS. 12A and 12B show tangible media, respectively a removable non-volatile memory unit and a company disc (CD) storing computer-readable code which when run by a computer perform operations according to example embodiment; and
FIG. 13 is a block diagram of a system in accordance with an example embodiment.

### Detailed description

The scope of protection sought for various example embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

A neural network (NN) is a computation graph consisting of several layers of computation. Each layer consists of one or more units, where each unit performs an elementary computation. A unit is connected to one or more other units, and the connection may be associated with a weight. The weight may be used for scaling the signal passing through the associated connection. Weights are learnable parameters, i.e., values which can be learned from training data. There may be other learnable parameters, such as those of batch-normalization layers.

Two widely used architectures for neural networks are feed-forward and recurrent architectures. Feed-forward neural networks are such that there is no feedback loop: each layer takes input from one or more preceding layers and provides its output as the input for one or more of the subsequent layers. Also, units inside a certain layer take input from units in one or more preceding layers, and provide output to one or more following layers.

Initial layers (those close to the input data) may extract semantically low-level features such as edges and textures in images, and intermediate and final layers may extract more high-level features. After the feature extraction layers, there may be one or more layers performing a certain task, such as classification, semantic segmentation, object detection, de-noising, style transfer, super-resolution, etc. In recurrent neural networks, there is a feedback loop, so that the network becomes stateful, i.e., it is able to memorize information or a state.

Neural networks are being utilized in an ever-increasing number of applications for many different types of device, such as mobile phones. Examples include image and video analysis and processing, social media data analysis, device usage data analysis, etc.

An important property of neural networks (and other machine learning tools) is that they are able to learn properties from input data, either in supervised or unsupervised ways. Such learning is a result of a training algorithm, or of a meta-level neural network providing the training signal.

In general, a training algorithm consists of changing some properties of the neural network so that its output is as close as possible to a desired output. For example, in the case of classification of objects in images, the output of the neural network can be used to derive a class or category index, which indicates the class or category that the object in the input image belongs to. Training usually occurs by minimizing or decreasing an error of an output, also referred to as the loss. Examples of losses are mean squared error, cross-entropy, etc. Training may be an iterative process, where at each iteration the algorithm modifies the weights of the neural network to make a gradual improvement of the network's output, i.e., to gradually decrease the loss.

In this specification, the terms "model", "neural network", "neural net" and "network" generally used interchangeably, and also the weights of neural networks are sometimes referred to as learnable parameters or simply as parameters.

Training a neural network is an optimization process, but the final goal is different from the typical goal of optimization. In optimization, the goal is often to minimize a function. In machine learning, the goal of the optimization or training process is to make the model learn the properties of the data distribution from a limited training dataset. In other words, the goal is to learn to use a limited training dataset in order to learn to generalize to previously unseen data (i.e., data which was not used for training the model). This is usually referred to as generalization. In practice, data is usually split into at least two sets: a training set and a validation set. The training set may be used for training the network, i.e., to modify its learnable parameters in order to minimize the loss. The validation set may be used for checking the performance of the network on data which was not used to minimize the loss, as an indication of the final performance of the model. In particular, the errors on the training set and on the validation set may be monitored during the training process to understand the following:
- If the network is learning at all (in this case, the training set error should decrease, otherwise the model is in the regime of underfitting).
- If the network is learning to generalize (in this case, also the validation set error needs to decrease and to be not too much higher than the training set error).

If the training set error is low, but the validation set error is much higher than the training set error, or it does not decrease, or it even increases, the model is in the regime of overfitting. Such a model may perform well on the training set of data, but may perform poorly on a set not used for tuning its parameters.

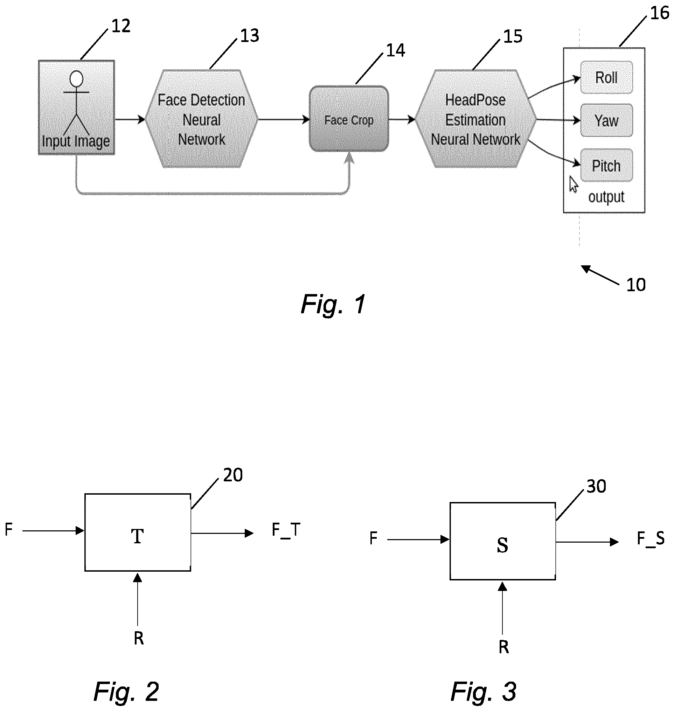

FIG. 1 is a block diagram of a system, indicated generally by the reference numeral 10, in accordance with an example embodiment. The system 10 comprises an input image 12, a face detection module 13, a face crop module 14, a head pose estimation module 15 and an output 16.

The input image 12 may be, for example, an RGB image, infra-red (IR) image or some similar input image. The output 16 provides roll, yaw and pitch data (e.g. in the form of a list of floating point values).

The face detection module 13, which may be implemented using a neural network, such as a deep neural network (DNN), detects faces in input images by using a face detection algorithm. On the basis of the detected face, the face crop module 14 crops the original input image data 12 to provide face regions to the head pose estimation module 15.

The head-pose estimation module 15, which module may also be implemented using a neural network, such as a deep neural network (DNN), estimates the roll, yaw and pitch of the head in the input image, thereby providing the output 16.

The system 10 may be used to provide unconstrained head pose estimations using embedded and/or mobile devices. A general bottleneck of running neural networks on the mobile and/or embedded devices is that such algorithms, e.g. in the modules 13, 14 and/or 15, typically have high computation burden, such as high need for processor power and/or memory resources, and hence latency.

Using neural networks with high capacity in this task yields high accuracy. However, to overcome the computation burden (for example when seeking to implement such algorithms using embedded devices or mobile phones), a low-capacity neural network may be used (where capacity may refer to the number of weights, connections between neurons, and/or layers in the neural network and/or the number of computational operations that are needed during inference, such as FLOPs (floating point operations per second)). However, low-capacity networks may have lower performance (e.g. in terms of accuracy and/or generalization capabilities) than high-capacity networks, when trained in the normal way, i.e., when trained independently on a certain training dataset.

One strategy for seeking to improve the performance of a low-capacity neural network is to use a teacher-student training methodology, where a high capacity network (the "teacher"), e.g. in terms of accuracy and/or generalization capabilities, helps the low capacity network (the "student"), e.g. in terms of accuracy and/or generalization capabilities, to learn the task. After the teacher-student training, the student network is used as a replacement to the teacher network.

The high-capacity (teacher) network is assumed to be more robust and generalizable to new and unseen data than the low-capacity (student) network.

Data imbalance is a condition in annotated datasets where one or more subsets of the one or more classes have high occurrences of one or more features compared to the rest of the classes, i.e., the distribution of data is not uniform. In the case of head pose estimation, one or more datasets may contain fewer data samples for extreme head poses (e.g., when the head is rotated a lot towards the left or right-hand sides or when the head moves up to down to a significant degree). The use of unbalanced data in classical teacher-student training can result in student models that perform worse for those head poses for which training data was in comparison with other head poses for which training data was more abundant.

FIG. 2 shows a neural network module, indicated generally by the reference numeral 20, in accordance with an example embodiment. The neural network 20, such as a deep neural network, is a relatively high-capacity neural network.

FIG. 3 shows a neural network module, indicated generally by the reference numeral 30, in accordance with an example embodiment. The neural network 30, such as a deep neural network, is a relatively low-capacity neural network.

The neural networks 20 and 30 may be used as teacher and student networks respectively in a student-teacher methodology.

The neural networks 20 and 30 are both trained used a labelled dataset R (referred to herein as a first training dataset) that consists of images (such as input images 12) and corresponding ground-truth poses (such as desired outputs 16). Thus, the first training dataset R can be expressed as: {image : pose}. The pose may be expressed as a list of three floating point values representing angles in the three axes (yaw, pitch, roll). As discussed herein, annotated pose datasets (such as the dataset R) can be unbalanced, as they may have data concentrated in and around a mean pose or a center pose (which may be expressed as [0,0,0]) such that, at extremes, less annotated data, e.g. for other poses, may be available for training purposes.

As shown in FIG. 2, the first neural network 20 receives a set of images F. The set of images F is a set of unlabelled images (F: {image}); thus for each image in this dataset, we do not have a ground-truth pose. By providing the images F at the input of the neural network 20, the network 20 can derive pose information for one or more or each image of this dataset from the output of the teacher neural network 20 to generate a first generated dataset F_T.

Similarly, by providing the set of the images F at the input of the neural network 30, we can derive pose information for one or more or each image of this dataset from the output of the student neural network 30 to generate a second generated dataset F_S.

The higher capacity (teacher) neural network 20 in general works better than the lower capacity (student) neural network 30. Hence, the pose information of the first generated dataset F_T (pose_t) is generally more accurate than the pose information of the second generated dataset F_S (pose_s).

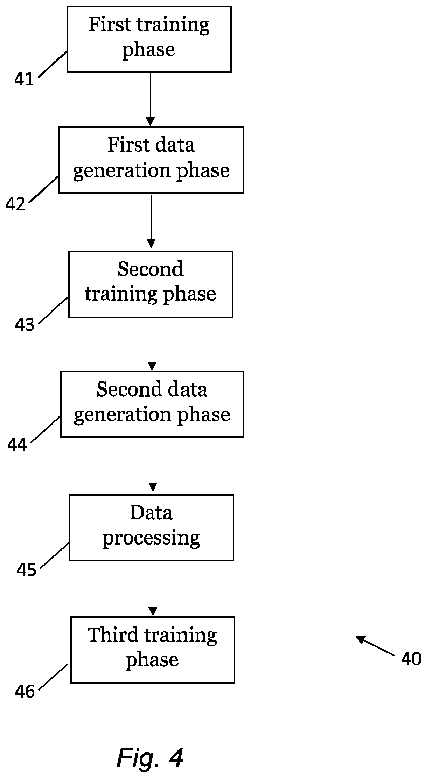

FIG. 4 is a flow chart showing an algorithm, indicated generally by the reference numeral 40, in accordance with an example embodiment.

The algorithm 40 starts at first training phase operation 41. In the first training phase 41, the relatively high capacity neural network 20 is trained using a labelled dataset R.

The (unlabelled) set of images F are applied to the trained neural network 20 in a first data generation phase 42. The first data generation phase generates labels for the dataset F sequentially as pose_t. The output of the first data generation phase 42 is the first generated dataset F_T : {image: pose_t}. As discussed further below, due to the high quality of the teacher neural network, the dataset F_T can be used as a labelled dataset (in a similar manner to the first training dataset R) and can therefore be used for training purposes.

In a second training phase 43, the relatively low capacity neural network 30 is trained using the labelled dataset R.

The (unlabelled) set of images F is applied to the trained neural network 30 in a second data generation phase 44. The second data generation phase generates labels for the dataset F sequentially as pose_s. The output of the second data generation phase 44 is the second generated dataset F_S : {image : pose_s}. As indicated above, the pose information of the second generated dataset F_S is generally of lower accuracy that the pose information of the first generated dataset F_T.

In a data processing operation 45, the first and second generated datasets F_T and F_S are processed and stored as a generated training dataset F_G. As discussed further below, the generated training dataset F_G is selected to attempt to address biases in the dataset R and/or the images F.

Finally, in operation 46, a relatively low capacity (i.e. student) neural network S_Y is trained in a third training phase. As discussed further below, the third training phase trains the relatively low capacity (i.e. student) neural network using a combination of the first training datasets R and the generated training dataset F_G.

It should be noted that the algorithm 40 is provided by way of example. For example, at least some of the operations of the algorithm 40 may be combined or may be provided in a different order.

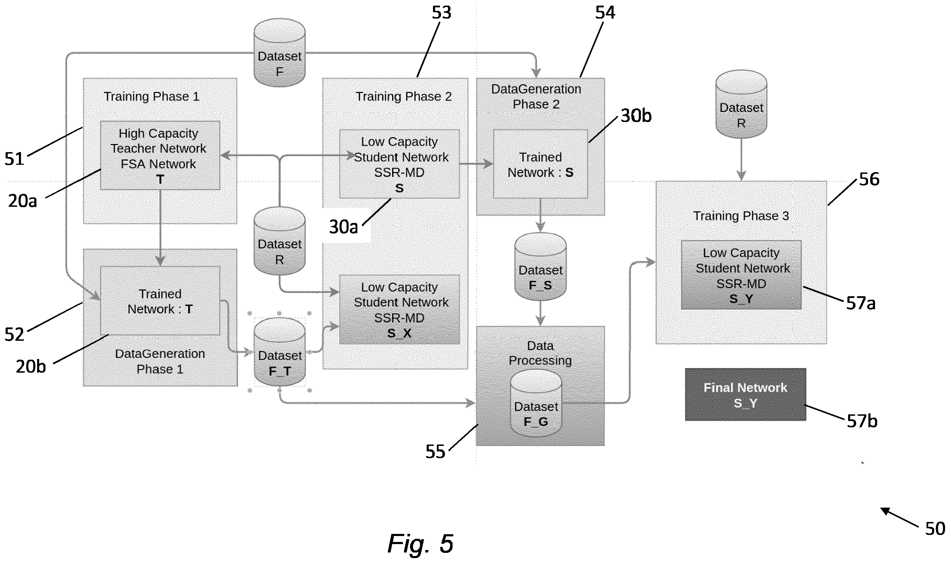

FIG. 5 is a block diagram of a system, indicated generally by the reference numeral 50, in accordance with an example embodiment. The system 50 may be used to implement the algorithm 40 described above.

The system 50 comprises a first training phase module 51, a first data generation module 52, a second training phase module 53, a second data generation module 54, a data processing module 55 and a third training phase module 56 that may be used to implement the operations 41 to 46 of the algorithm 50 described above respectively.

The first training phase module 51 receives the labelled dataset R (the first training dataset) and trains a first (relatively high capacity) neural network, such as a first deep neural network (labelled 20a in FIG. 5 for clarity).

The first data generation module 52 receives the set of images F and generates the first generated dataset F_T using the neural network trained by the module 51 (that neural network being labelled 20b in FIG. 5 for clarity). Thus, the first data generation module 52 generates the first generated dataset F_T by applying image data of the set of images F to the first neural network 20.

The second training phase module 53 receives the labelled dataset R (the first training dataset) and trains a second (relatively low capacity) neural network, such as a second deep neural network (labelled 30a in FIG. 5 for clarity). Optionally, the second training phase module may train a low capacity neural network (similar to the neural network 30 described above) based on a combination of the first training dataset and the first generated dataset.

The second data generation module 54 receives the set of images F and generates the second generated dataset F_S using the neural network trained by the module 53 (that neural network being labelled 30b in FIG. 5 for clarity). Thus, the second data generation module 54 generates the second generated dataset by applying image data of the first training dataset F to the second neural network 30b.

The data processing module 55 receives the first generated dataset F_T and the second generated dataset F_S and generates the generated training dataset F_G. The generated training dataset F_G comprises image and estimated pose data pairs selected from said first generated dataset F_T. As discussed in detail below, the selection may be based on a normalised histogram distribution of average differences between estimated pose data of the first and second generated datasets for respective images such that more selections are made at pose data levels having higher average differences than pose data levels having lower average differences.

The third training phase module 56 trains a third (relatively low capacity) neural network 57a (S_Y), such as a third deep neural network, based on a combination of some or all of the first training dataset R and some or all of the generated training dataset F_G, resulting a trained network 57b (S_Y) as discussed further below.

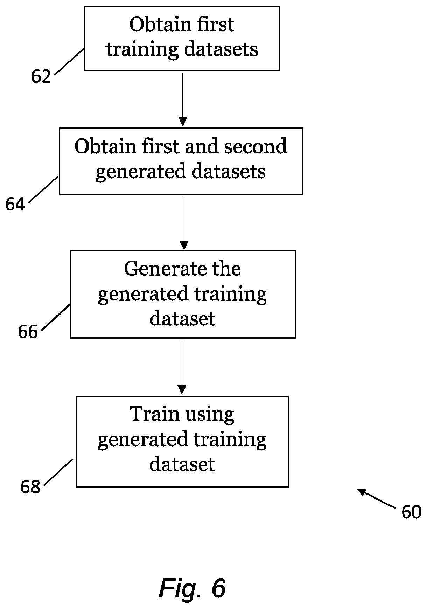

FIG. 6 is a flow chart showing an algorithm, indicated generally by the reference numeral 60, in accordance with an example embodiment. The algorithm 60 may be implemented by the data processing module 55 and the third training phase mode 56 and may, in some example embodiments, be implemented at a user device (such as a mobile communication device). In some alternative embodiments, the neural network trained by the algorithm 60 may be provided for use by a user device (such as a mobile communication device).

The algorithm 60 starts at operation 62, where the first training dataset R is obtained (e.g. received). Then, at operation 64, the first generated dataset F_T and the second generated dataset F_S are obtained (e.g. received).

At operation 66, the data processing module 55 generates the generated training dataset (F_G) from the first and second generated datasets (F_T and F_S respectively) obtained in the operation 64.

At operation 68, the third neural network 57a is trained based on a combination of some or all of the first training dataset (R) (obtained in the operation 62) and the generated training dataset (F_G) (generated in the operation 66) resulting a trained network 57b.

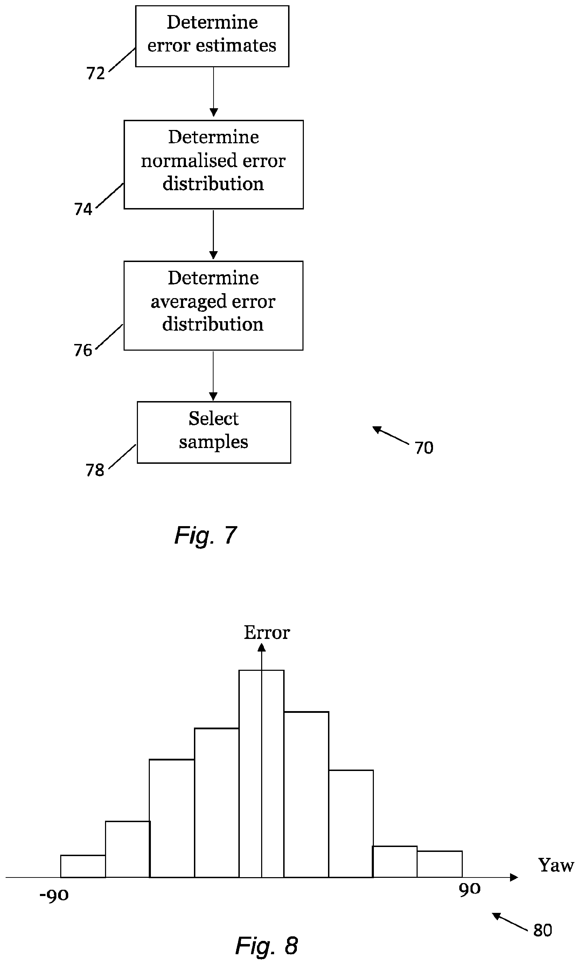

FIG. 7 is a flow chart showing an algorithm, indicated generally by the reference numeral 70, in accordance with an example embodiment. The algorithm 70 shows an example algorithm for generating the generated training dataset F_G (and may be implemented by the data processing module 55 described above).

The algorithm 70 starts at operation 72, where pose error estimates are generated for one or more or all of the images of the set of images F. For each image, the pose error is the difference between the pose output for that image of the dataset F_T (pose_t - which is assumed to be correct) and the respective pose output of the dataset F_S (pose_s - which is assumed to include errors). In other words, the pose error is the difference between the poses as determined by the teacher and student networks that are provided to the data processing module 55.

At operation 74, an error distribution is determined (e.g. as a histogram). The distribution considers how the errors are distributed based on pose data values.

FIG. 8 is a histogram plot, indicated generally by the reference numeral 80, in accordance with an example embodiment. The plot 80 shows pose data (e.g. yaw in this example) and normalised error. The plot 80 is therefore an example of the error distribution determined in the operation 74 described above. Note that the error is larger when yaw is close to zero; this is to be expected since, at noted above, more samples are taken with the yaw close to zero than at the extremes (e.g. yaw close to +90 degrees or close to -90 degrees). The plot 80 may be normalised (e.g. sized such that the data points sum to 1).

The histogram 80 is based on quantised pose data (specifically yaw data) of the first generated dataset F_T.

At operation 76 of the algorithm 70, an averaged error distribution is generated. For example, the histogram 80 may be modified such that an average error per sample is plotted.

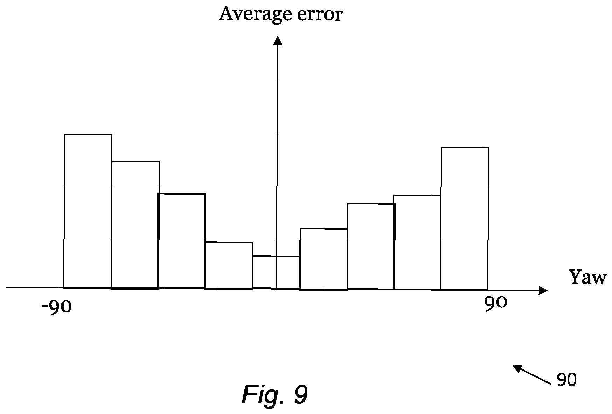

FIG. 9 is a histogram plot, indicated generally by the reference numeral 90, in accordance with an example embodiment. The plot 90 shows pose data (yaw in this example) and averaged error distribution. The plot 90 is therefore an example of the averaged error distribution generated in the operation 76 described above. Note that the averaged error is larger when the yaw is at the extremes; again this is to be expected since the trained model is likely to be less effective at the extremes, where there are fewer data points available for training.

The histogram 90 is based on quantised pose data (specifically yaw data) of the first generated dataset F_T.

At operation 78 of the algorithm 70, samples are selected from the first generated dataset F_T for use in training a neural network in the third training phase 46 described above.

The samples are selected in the operation 78 based on a normalised histogram distribution of average differences generated in the operation 76 (e.g. as shown in the histogram plot 90). For example, the number of samples selected within any particular quantised pose level may be dependent on the averaged error distribution such that more samples are taken where the averaged error is higher. This enables more training samples to be provided where their average error rate is higher. This tends to result in more training samples being provided at extreme poses of the set of images F.

Once the number of samples to be selected within a particular quantised pose data range is determine, the actual selection of the samples within that quantised pose data range may be performed randomly or pseudo-randomly.

By way of example, the histogram plot 80 may be generated as set out below.

We create a dictionary (look-up table) F_G : {QP : (poseErr_g, [img_ids])}, where:
- QP is the quantized pose (yaw only in this example);
- For every image "f" in the first generated dataset F_T we have a pose_t, and we compare it with the value pose_s for the same image "f" in F_S, and store the absolute difference in poseErr_f (which represents the error done by S); and
- imd_ids identifies the image for which the pose error data relates.

The dictionary has 181 keys, one for each quantized-degree, thus corresponding to 181 yaw degrees. That is, the range of yaw is [-90 degrees, 90 degrees]. This dictionary is used to map from a certain quantized degree to the corresponding error poseErr_g done by the student neural network S and to the list of images [img_ids] in set of images F from which the yaw was estimated.

For the sake of simplicity, we consider only yaw here. However, the procedure is similarly extended to the other pose-axes "pitch" and "roll".

The key QP for F_G is computed as int(pose_t[0]). (pose_t[0] is the yaw since pose list follows the order yaw, pitch, roll.)

Now we set the values such that F_G[QP][0] = poseErr_g+(sum(poseErr_f)), that is we update poseErr_g by adding the sum(poseErr_f).

We also update the img_ids list in F_G[QP][1] by appending the image-ID of image "f".

### Example:

Let f=("1.jpg") => F_T["1.jpg"] = pose_t, F_S["1.jpg"] = pose_s
poseErr_f = mod(pose_t-pose_s)
They key QP is int(pose_t[0]) and we set F_G[QP][0]=poseErr_g+poseErr_f (poseErr_g is initially zero) and F_G[QP][1]=[...., "1.jpg"]

After iterating over all the images in F_T, the poseErr_g in F_G is an un-normalized histogram distribution with the key as random variable and their corresponding values as the probability. Normalising the data provides a histogram having the form of the histogram plot 90 described above.

With the normalized histogram generated, the third training phase 46 may be implemented as follows.

First, we take an exact copy of untrained student network as S_Y.

We train with a batch size of 16 (although other batch sizes could be chosen, such as other batch sizes that are a power of 2, such as 32, 64 etc.), and we create the batch in the following way:
- We create a sub batch of size 8 by sampling from the dataset R
- For the next sub batch of size 8 we sample from F_G in the following way
   ∘ For each observation in the sub batch:
   ▪ Choose the histogram bin poseErr_g of F_G according to its probability or the proportion of occurrence, as poseErr_g is treated as a discrete probability mass function.
   ▪ Histogram bin identifiers are the keys in F_G and the probability is their respective value poseErr_g.

Example: let F_G={0:(2, img-ids), 1:(5, img-ids), 3:(2, img-ids)} then bin identifiers are [0,1,2] and their unnormalized probabilities are [2,5,2].

We sample for bin id from [0,1,2] based on their occurrence probability: [2,5,2]
Let us assume we got bin id as 1. Now we, use the bin id as the key to get a list of images from F_G, from which we uniformly sample.

Let F_G={0:(2, ["a.jpg","b.jpg"]), 1:(5, ["k.jpg","l.jpg"](, 2:(2, ["x.jpg", "y.jpg"])}.

As we got out sample bin id as 1, we can sample one image from img-ids in F_G[1], that is we can take one image uniformly from ["k.jpg", "l.jpg"].

Once we have our sub batches, we randomly mix them to create a full batch of size 16, although other batch sizes could be used, such as other batch sizes that are a power of 2, such as 32, 64 etc.).

In a general example, relating to the descriptions in FIGS 4 - 9, additional to a pose data/information/features, any other data/information/features can be derived from input datasets, such as positions of body parts, finger positions, wrist positions, facial expressions, or emotions.

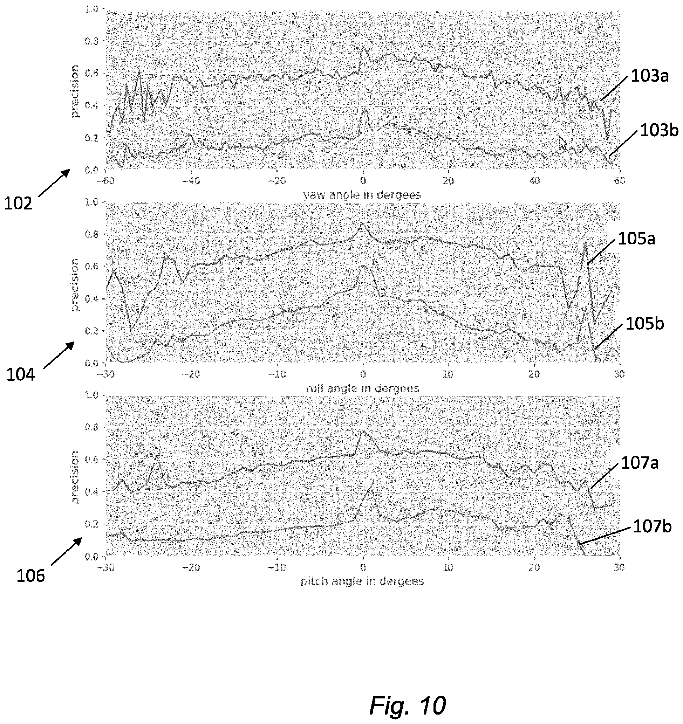

FIG. 10 shows plots demonstrating the performance of implementations of example embodiments. Specifically, a first plot 102 shows the precision of yaw angle estimates, a second plot 104 shows precision of roll angle estimates and a third plot 106 shows precision of pitch angle estimates. In each case, the performance of a student model S_Y trained using the first training dataset R and the generated training dataset F_G is compared with the performance of a student model S_X trained using the first training dataset R and the first generated dataset F_T (as shown in FIG. 5).

In the first plot 102, the precision of the model S_Y is shown by the line 103a and the precision of the model S_X is shown by the line 103b. In the second plot 104, the precision of the model S_Y is shown by the line 105a and the precision of the model S_X is shown by the line 105b. In the third plot 106, the precision of the model S_Y is shown by the line 107a and the precision of the model S_X is shown by the line 107b.

In each of the plots 102, 104 and 106, the model S_Y has higher precision than the model S_X.

In general, in the system 10 in FIG. 1, the input 12 may be any data or datasets, such as image data, audio data, or sensor data. The detection module 13, such as any trained neural network, may detect one or more classifications that it is has been trained to detect from the data, and output one or more classified dataset. The crop module 14, is an optional step to separate further elements from the one or more classified dataset. In some examples, the module 14 may be a trained neural network or other algorithm that may separate one or more elements from the classified dataset. The estimation module 15, such as a feature estimation module, may be a neural network, such as a student network F_Y, that is trained according to the process 50 as described in FIG. 5. The student network may be trained to detect one or more additional and/or further details, such as features, from the previously classified dataset. The output 16 of the estimation module 15 may be one or more further details, such as features of the previously classified dataset from the module 13 or element from the module 14, for example

{classification n : feature 1 : feature n}. Similarly, input datasets in FIGS 5-9 may be any data, such as image data, audio data, or sensor data.

After training we have our final trained model S_Y (57b), that can be used to infer unlabeled image data for head pose detection, for example, in a client device, such as a mobile communication device. The client device may, for example, have one or more still/video cameras, which can record and/or stream image data. Alternatively, or in addition, the client device may receive image data from one or more external still/video cameras. In one example, the client device can be a vehicle, wherein image data from a camera inside of the vehicle is inferenced/analyzed to detect the head pose of a driver of the vehicle and/or a passenger of the vehicle (for example using {driver ; poseY}). Based on the head pose, the vehicle can determine an attention level of the driver and/or the passenger, and inform the driver and/or passenger accordingly and/or adjust one or more functions of the vehicle accordingly. In another example, the vehicle can inference/analyze image data from a camera monitoring environment of the vehicle to detect head pose of one or more pedestrians and/or cyclists, for example {head : poseY} or {pedestrianX : head : poseY}. Based on the head pose, the vehicle can determine whether a pedestrian or cyclist has detected the vehicle (i.e. is a normal head pose (face forward) of the pedestrian or cyclist facing the vehicle/camera) and inform the driver accordingly. Alternatively, the vehicle can detect a moving direction (e.g. absolute direction relative to an earth coordinate system, or a relative direction relative to a main direction of the vehicle) of the one or more pedestrians and/or cyclists, such as {pedestrian1 ; 325 degree} or {cyclist2 : away from vehicle}. In a further example, the client device can be a camera sensor that is inferencing/analyzing to detect a head pose of a one or persons in a view of an image of the camera. Based on a direction of head pose of the one or more persons, e.g. [{person1 : pose1}, {person2 : pose2}], the camera may decide to record a related image. In still further example, the camera sensor may be trained to inference/analyze to detect a position of a body part in a view of an image, such as {podypartX: positionY}. In case of an audio dataset, the output can be, for example, {person1 : mood2}. In case of a sensor dataset, the output can be, for example, {sensor2 : vibration level1}. Of course, many other examples use of the principles described herein will be apparent to the skilled person.

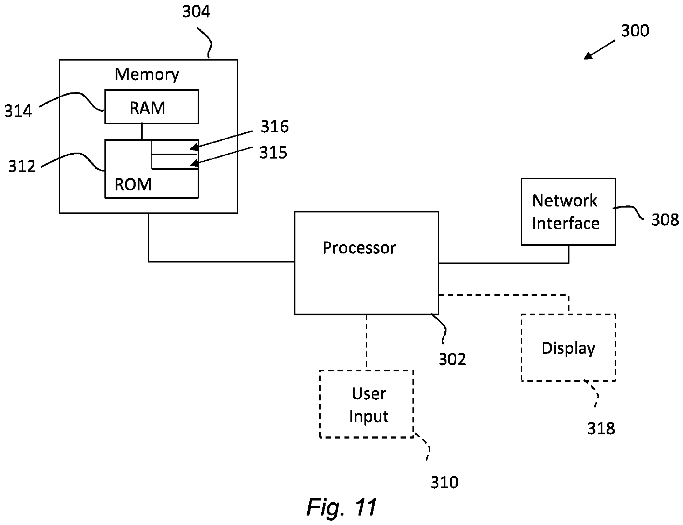

For completeness, FIG. 11 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 40, 60 and 70 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

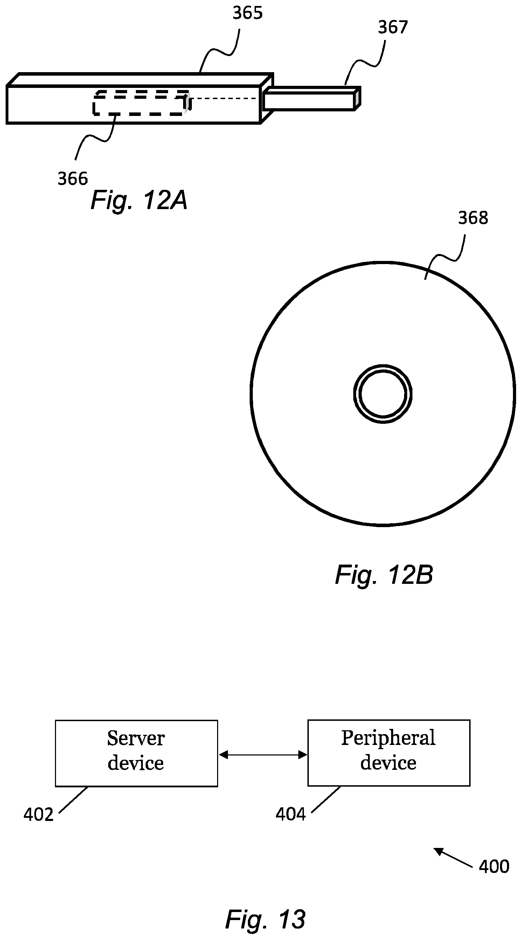

FIGS. 12A and 12B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

FIG. 13 is a block diagram of a system, indicated generally by the reference numeral 400, in accordance with an example embodiment.

The system 400 may be configured with means for training one or more neural networks and/or inferencing the one or more trained neural networks according to one or more example embodiments. The system 400 may comprise one or more apparatuses or processing systems 300 described above, such one or more server devices 402, for example, a remote server, an edge device, a personal computer, an access point, a router, or any combination thereof, and one or more peripheral devices 404, for example, an end user device, a mobile communication device, a mobile phone, a smartwatch, a still/video camera, a display device, a smart speaker, a television, a household appliance, a sensor device, an IoT (Internet of Things) device, a vehicle, an infotainment system, or any combination thereof. The server device 402 and the peripheral device 404 may be associated or registered with a same user or same user account.

The server 402 and peripheral device(s) 404 may be connected and/or paired through a wired communication link and/or wireless communication link, such as local area network (LAN), wireless telecommunication network, such as 5G network, wireless short range communication network, such as wireless local area network (WLAN), Bluetooth^{®}, ZigBee^{®}, ultra-wideband connection (UWB), IoT communication network/protocol such as a Low-Power Wide-Area Networking (LPWAN), a LoRaWAN^{™} (Long Range Wide Area Network), Sigfox, NB-IoT (Narrowband Internet of Things), or similar.

Either or both the server 402 and the peripheral device 404 may comprise one or more sensors for generating input data, including, but not limited to, audio, image, video, physiological and motion data. For example, both the server 402 and the peripheral device 404 may comprise one or more microphones, cameras, physiological sensors, such as, or motion sensors such as, but not limited to, gyroscopes and/or accelerometers. The input data, such as user input data, generated by said one or more sensors may be provided to a neural network for both training and/or inference generation.

In additional or alternative example embodiments, either or both the one or more server devices 402 and one or more peripheral devices 404 may comprise one or more hardware (HW) components and/or software (SW) components, as described above relating to the processing system 300, that additionally or alternatively of the one or more sensors can generate input data, such as one or more HW and/or SW input data, relating to functions and/or measurements of the one or more HW and/or SW components, such as power/battery level, computer processor functions, radio transmitter/receiver functions, application status, application error status, etc. or any combination thereof.

In some examples, the server device 402 may be a mobile communication device, and the peripheral device 404 may be a wearable sensor device, such as a smart watch.

In some examples, the modules 51 - 56 and their related processes and datasets as described relating to FIG. 5, can reside in any combinations between the server device 402 and the peripheral device 404, for example, all the modules either on the server device 402 or the peripheral device 404, the modules 54 - 56 on the peripheral device 404 and all other modules on the server device 402, the modules 55 and 56 on the peripheral device 404 and all other modules on the server device 402, the module 56 on the peripheral device 404 and all other modules on the server device 402.

In one example, an apparatus, such as a client device or a peripheral device 404, can comprise means for performing method sets, such as:
receiving a teacher-student model generated dataset (F_G),
   wherein in the generated dataset (F_G) is labelled data, e.g. classifications have related ground-truth values, for example, {classification x : feature y},
receiving a second dataset (R),
   wherein in the second dataset (R) is labelled data, e.g. classifications have related ground-truth values, for example, {classification x : feature y},
wherein in the teacher-student model generated dataset (F_G) is partly generated with the second dataset (R),
training a neural network (S_Y) stored in the apparatus with the dataset (F_G) and the second dataset (R),
   wherein a model of the neural network (S_Y) is/has the same as a model of the student network used for generating the dataset (F_S),
receiving sensor data,
   the sensor data, such as image date, audio data, motion data or physiological data,
   wherein the sensor data is received from an external sensor and/or an internal sensor,
   wherein the sensor data is unlabelled data,
using the trained neural network (S_Y) to inference the sensor data to determine one or more related inference results,
determining one or more outputs/instructions based on the one or more inference results,
wherein the one or more instructions can be executed in the apparatus and/or transmitted to some other device, and
wherein the means comprise, at least one processor, at least one memory including computer program code, the at least one memory and the computer program configured, with the at least one processor, to cause the performance of the apparatus.

In one example, an apparatus, such as a client device or a peripheral device 404, can comprising means for performing method sets, such as:
determining or generating a teacher-student model dataset (F_G),
   wherein determining from a teacher network generated dataset (F_T) (that is labelled data), and a student network generated dataset (F_S) (that is labelled data),
   wherein in the determined teacher-student model dataset (F_G) is labelled data, e.g. classifications have related ground-truth values, for example, {classification x : feature y},
receiving a second dataset (R),
   wherein in the second dataset (R) is labelled data, e.g. classifications have related ground-truth values, for example {classification x : feature y},
training a neural network (S_Y) stored in the apparatus with the generated dataset (F_G) and the second dataset (R),
   wherein a model of the neural network (S_Y) is/has the same as a model of the student network used for generating the dataset (F_S),
using the trained neural network to inference sensor data received at the apparatus to produce one or more related inference results,
   the sensor data, such as image date, audio data, motion data or physiological data,
   wherein the sensor data is received from an external sensor and/or an internal sensor,
   wherein the sensor data is unlabelled data,
determining one or more outputs/instructions based on the inference results, wherein the one or more instructions can be executed in the apparatus and/or transmitted to some other device, and
wherein the means comprise, at least one processor, at least one memory including computer program code, the at least one memory and the computer program configured, with the at least one processor, to cause the performance of the apparatus.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 4, 6 and 7 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for:
obtaining a first training dataset (R), wherein the first training dataset (R) comprises a plurality of first image and pose data pairs;
obtaining a first generated dataset (F_T), wherein the first generated dataset (F_T) comprises a plurality of first image and estimated pose data pairs, wherein the estimated pose data of the first image and the estimated pose data pairs are generated, from a set of images (F), by a first neural network (T) trained using the first training dataset (R);
obtaining a second generated dataset (F_S), wherein the second generated dataset (F_S) comprises a plurality of second image and estimated pose data pairs, wherein the estimated pose data of the second image and the estimated pose data pairs are generated, from the set of images (F), by a second neural network (S) trained using the first training dataset (R);
generating a generated training dataset (F_G) from the first (F_T) and second (F_S) generated datasets, wherein the generated training dataset (F_G) comprises the image and estimated pose data pairs selected from said first generated dataset (F_T); and
training a third neural network (S_Y) based on a combination of some or all of the first training dataset (R) and the generated training dataset (F_G).

2. An apparatus as claimed in claim 1, wherein said selection is based on a normalised histogram distribution of average differences between the estimated pose data of the first (F_T) and second (F_S) generated datasets for respective images such that more selections are made at pose data levels having higher average differences than pose data levels having lower average differences.

3. An apparatus as claimed in claim 2, wherein said histogram distribution is based on quantised estimated pose data of the generated training dataset (F_G), such that said estimated pose data has a plurality of quantised pose data ranges.

4. An apparatus as claimed in claim 3, wherein the means are further configured to perform; determining a number of selected image and estimated pose data pairs for each of quantised pose data ranges such that more selections are made at the quantised pose data ranges having higher average differences than the quantised pose data ranges having lower average differences.

5. An apparatus as claimed in claim 3 or 4, wherein the means are further configured to perform; selecting randomly or pseudo-randomly said ranges from within a quantised pose data range.

6. An apparatus as claimed in any one of the preceding claims, wherein the first neural network (T) is a relatively high capacity neural network and the second (S) and third neural networks (S_Y) are relatively low capacity neural networks when compared to the first neural network (T).

7. An apparatus as claimed in any one of the preceding claims, wherein the means are further configured to perform:
generating the first generated dataset (F_T) by applying image data of said images (F) to the first neural network (T); and/or
generating the second generated dataset (F_S) by applying the image data of said images (F) to the second neural network (S).

8. An apparatus as claimed in any one of the preceding claims, wherein the means are further configured to perform;
train the first neural network (T) using said first training dataset (R); and/or train the second neural network (S) using said first training dataset (R).

9. An apparatus as claimed in any one of the preceding claims, wherein the means are further configured to perform;
use the third neural network (S_Y) to inference received sensor data for determining one or more related inference results.

10. An apparatus as claimed in claim 9, wherein the sensor data comprises one or more image of an object,
and wherein the determined one or more related inference results are one or more pose estimations of the object.

11. An apparatus as claimed in claim 10, wherein a pose estimation comprises one or more of roll, yaw or pitch data of the object.

12. An apparatus as claimed in claim 10, wherein the one or more related inference results is used to determine one or more related instructions to be executed in the apparatus.

13. The apparatus of any preceding claim wherein the means comprises;
at least one processor; and
at least one memory including computer program code, the at least one memory and computer program code configured to, with the at least one processor, cause the performance of the apparatus.

14. An apparatus comprising;
at least one processor; and at least one memory including at least one computer program code, the at least one memory and the at least one computer program code configured, with the at least one processor, to cause the apparatus to perform;
receive a teacher-student model generated dataset (F_G), wherein in the generated dataset is labelled data;
receive a second dataset (F), wherein in the second dataset (F) is labelled data;
train a neural network (S_Y) stored in the apparatus with the teacher-student model generated dataset (F_G) and the second dataset (R);
receive sensor data, wherein the sensor data is unlabelled data;
use the trained neural network (S_Y) to inference the sensor data to determine one or more related inference results; and
execute the determined one or more related inference results in the apparatus and/or transmitting the one or more results to some other device.

15. An apparatus comprising:
at least one processor; and at least one memory including at least one computer program code, the at least one memory and the at least one computer program code configured, with the at least one processor, to cause the apparatus to perform;
determine a teacher-student model dataset (F_G) from a teacher network generated dataset (F_T) and a student network generated dataset (F_S), wherein the teacher network generated dataset (F_T) and the student network generated dataset (F_S) are labelled data;
receive a second dataset (F), wherein in the second dataset is labelled data;
train a neural network (S_Y) stored in the apparatus with the determined teacher-student model dataset (F_G) and the second dataset (F);
use the trained neural network (S_Y) to inference received sensor data to determine one or more related inference results; and
execute the determined one or more related inference results in the apparatus and/or
transmitting the one or more results to some other device.
